# EUROPEAN PATENT SPECIFICATION

(11) **EP 3 341 664 B1**
(45) Date of publication and mention of the grant of the patent: **19.03.2025**
(21) Application number: 16760195.4
(22) Date of filing: 25.08.2016
(51) Int. Cl.: F25D 11/02, F25D 29/00

(54) **OPERATING METHOD OF REFRIGERATION DEVICE AND REFRIGERATION DEVICE**
BETRIEBSVERFAHREN EINER KÜHLVORRICHTUNG UND KÜHLVORRICHTUNG
PROCÉDÉ DE FONCTIONNEMENT D'UN DISPOSITIF DE RÉFRIGÉRATION ET DISPOSITIF DE RÉFRIGÉRATION

(30) Priority: 26.08.2015 CN 201510532717
(43) Date of publication of application: 04.07.2018
(73) Proprietor: BSH Hausgeräte GmbH, 81739 München (DE)
(72) Inventor: TIAN, Yong, Nanjing Jiangsu 239016 (CN); ZHU, Qiwu, Chuzhou City Anhui 239000 (CN)
(86) International application number: PCT/IB2016/055071
(87) International publication number: WO 2017/033144

(56) References cited:
- EP-A2- 1 245 914
- CN-A- 103 868 321
- JP-A- 2000 213 861
- US-A1- 2014 208 783

## Description

### BACKGROUND

### Technical Field

The present invention relates to the field of refrigeration device technologies, and in particular, to an operating method of a refrigeration device and a refrigeration device.

### Related Art

JP 2000 213861 A discloses a refrigerator with overvoltage protection.

At present, it is known that a refrigerator, as disclosed in US 2014/208783 A1, EP 1 245 914 A2, or CN 103 868 321 A has multiple storage compartments and temperatures of the storage compartments can be controlled independently. For example, each of the different storage compartments has a respective turn-on temperature and shutdown temperature. The controller determines, based on a detected temperature of a storage compartment and a corresponding turn-on temperature/shut-down temperature, whether to run a compressor in order to cool the corresponding storage compartment. However, because the compartments have different set temperatures and load, the compressor may be frequently turned on and shut down to refrigerate different compartments.

Therefore, the compressor has relatively high power consumption, energy efficiency of the refrigerator is reduced, and a service life of the compressor is affected as well.

### SUMMARY

An objective of the present invention is to provide an improved operating method of a refrigeration device and a refrigeration device applied to the operating method.

The foregoing objective is achieved according to the present invention by an operating method of a refrigeration device according to claim 1.

Because storage compartments of the refrigeration device have different set temperatures and methods for storing and taking foods by opening or closing a door are different, after a storage compartment just reaches a shutdown temperature and the compressor has been shut down for a very short time such as one minute, a temperature of another storage compartment may rise to a turn-on temperature and refrigeration is required; and the compressor is turned on again after a short shut-down time. In this way, the compressor is frequently turned on and shut down due to alternate refrigeration requests of the storage compartments in a short time. In initial three to five minutes, the compressor is started to mainly create a pressure difference between a condenser and an evaporator. Electric energy consumed by the compressor at this stage is not used for refrigeration and therefore is wasted. Then, a normal refrigeration state is entered. Therefore, frequent turn on and shut-down of the compressor increase power consumption and affect a service life of the compressor. Moreover, noise during turn on and shut-down of the compressor is louder than noise during stable running of the compressor, and frequent turn-on and shut-down noise bothers a user.

After the compressor is turned on to refrigerate the first storage compartment and the storage compartment reaches the shutdown temperature, and when a temperature of the second storage compartment does not reach the turn-on temperature of the second storage compartment, the compressor enters a combination mode to determine whether to continue running the compressor to cool the second storage compartment, rather than being shut down immediately. It can be seen that when the refrigeration of the first storage compartment ends and the temperature of the second storage compartment does not reach the turn-on temperature, the compressor may still continue running based on a purpose of cooling the second storage compartment. For example, the compressor may continue running in order to cool the second storage compartment to the shutdown temperature of the second storage compartment, which helps to reduce a probability of frequently turning on and shutting down the compressor in a short time, thereby helping to reduce power consumption, prolonging a service life, and reduce noise of the refrigeration device.

In the present invention, the turn-on temperature of the storage compartment refers to a turn-on temperature limit of the storage compartment. That is, when a temperature of the compressor reaches the temperature limit, a controller may determine that the storage compartment has a refrigeration requirement and the compressor should run to cool the storage compartment. A turn-on temperature of a storage compartment is generally related to a set temperature of the storage compartment. At the same set temperature, the turn-on temperature of the storage compartment may be constant. Or, the turn-on temperature of the storage compartment may be adjusted based on some conditions. For example, the controller may adjust the turn-on temperature of the storage compartment based on an ambient temperature.

In the present invention, the shutdown temperature of the storage compartment refers to a shutdown temperature limit of the storage compartment. That is, when the storage compartment is cooled to the shutdown temperature limit, the compressor may stop cooling the storage compartment. A shutdown temperature of a storage compartment is generally related to a set temperature of the storage compartment. At a same set temperature, the shut-down temperature of the storage compartment is constant. Or the shut-down temperature of the storage compartment may be adjusted based on some conditions. For example, the controller may adjust the shut-down temperature of the storage compartment based on an ambient temperature.

It should be understood that, the present invention is applicable to a refrigeration device having multiple storage compartments, such as a refrigeration device having two, three or more storage compartments. In an embodiment, after refrigeration of each storage compartment ends but another storage compartment does not reach a corresponding turn-on temperature, the controller determines whether the another storage compartment should enter a combination mode, that is, whether should continue running the compressor to cool remaining one or more storage compartments. In another embodiment, only when refrigeration of a particular storage compartment (such as a freezing compartment) ends and another storage compartment (such as a storage compartment whose temperature may be set to above zero degrees centigrade) does not reach a turn-on temperature, the controller determines whether the compressor should continue running cool the another storage compartment. It should be understood that the present invention is applicable to a refrigeration device having a single refrigeration cycle system, a dual refrigeration cycle system, or a multiple refrigeration cycle system and two or more storage compartments whose temperatures can be controlled independently.

In the present invention, the determining whether to continue running a compressor in order to cool the second storage compartment includes determining whether the temperature of the second storage compartment is greater than or equal to a preset reduced turn-on temperature, where the reduced turn-on temperature is lower than the turn-on temperature of the second storage compartment, and greater than or equal to a shutdown temperature of the second storage compartment.

Therefore, even if the second storage compartment does not reach the turn-on temperature (which may also be referred to as a normal turn-on temperature) of the second storage compartment, in a combination mode, when the temperature of the second storage compartment reaches the reduced turn-on temperature (which may also be referred to as a turn-on temperature of the combination mode), the compressor may continue running based on a purpose of cooling the second storage compartment, which helps to prolong a single running time of the compressor, and reduce turn-on and shut-down frequencies of the compressor. In addition, using the reduced turn-on temperature to determine whether to continue running the compressor in order to cool the second storage compartment is easily implemented. Moreover, by setting the reduced turn-on temperature properly, a running mode of the compressor can be adjusted more effectively and more accurately.

In an embodiment, a reduced turn-on temperature is greater than a shutdown temperature. In another embodiment, a reduced turn-on temperature of a storage compartment may even be set to be equal to a shutdown temperature of the storage compartment. For example, a reduced turn-on temperature of a refrigeration compartment/a chill compartment/a variable-temperature compartment whose temperature is higher than that of a freezing compartment (compared with the freezing compartment, an evaporation temperature of a refrigerant in evaporators corresponding to these compartments is higher) may be set to a shutdown temperature thereof. Therefore, when refrigeration of the freezing compartment ends, in most cases, the compressor can continue running to cool the refrigeration compartment/the chill compartment/the variable-temperature compartment whose temperature is higher than that of the freezing compartment, so that a running time for cooling the refrigeration compartment/the chill compartment/the variable-temperature compartment whose temperature is higher than that of the freezing compartment can be effectively increased, thereby helping to reduce turn-on and shut-down frequencies of the compressor. In addition, it is found that it helps to improve refrigeration efficiency of the refrigeration device having a dual refrigeration cycle system/a multiple refrigeration cycle system. For the dual refrigeration cycle/multiple refrigeration cycle system, an evaporation temperature of a refrigerant in an evaporator of the refrigeration compartment/the chill compartment/the variable-temperature compartment whose temperature is higher than that of the freezing compartment; therefore it helps to improve energy efficiency.

In an embodiment of the present invention, the determining whether to continue running a compressor in order to cool the second storage compartment includes determining, in association with an ambient temperature, whether to continue running the compressor in order to cool the second storage compartment.

The ambient temperature refers to a temperature of an environment in which the refrigeration device is located. High and low ambient temperatures have different impacts on running of the refrigeration device, and different storage compartments of the refrigeration device have different refrigeration requirements at different ambient temperatures. Therefore, using the ambient temperature as one of conditions for determining whether to continue running the compressor in order to cool a storage compartment helps to evaluate a refrigeration requirement of a storage compartment more accurately, and form more precise refrigeration control.

In an embodiment, the step of determining, in association with an ambient temperature, whether to continue running the compressor in order to cool the second storage compartment includes:
determining whether the ambient temperature is less than a first ambient temperature threshold T1, and when the ambient temperature is less than the first ambient temperature threshold T1, not continuing running the compressor based on a purpose of cooling the second storage compartment; and/or
determining whether the ambient temperature is greater than a second ambient temperature threshold T2, and when the ambient temperature is greater than the second ambient temperature threshold T2, not continuing running the compressor based on the purpose of cooling the second storage compartment, where the first ambient temperature threshold T1 is less than the second ambient temperature threshold T2.

The first ambient temperature threshold T1 refers to a relatively low preset ambient temperature value. For example, the first ambient temperature threshold T1 may be lower than or equal to or approximate to a set temperature of the second storage compartment. When the first storage compartment is cooled to the shutdown temperature of the first storage compartment, because an external ambient temperature is relatively low, the temperature of the second storage compartment is easily kept at the set temperature. Therefore, the compressor does not need to continue running in order to refrigerate the second storage compartment.

The second ambient temperature threshold T2 refers to a relatively high preset ambient temperature value. At the relatively high ambient temperature, the refrigeration device has relatively heavy operating load, and the first storage compartment set as a freezing compartment generally needs a relatively long cooling time to reach the shutdown temperature of the first storage compartment. In a cooling process of the first storage compartment, the compressor also responds to a refrigeration requirement of the second storage compartment set as a refrigeration compartment/a chill compartment/a variable-temperature compartment whose temperature is higher than that of a freezing compartment, and cools the second storage compartment multiple times on the basis of determining that the temperature of the second storage compartment is greater than the reduced turn-on temperature of the second storage compartment, to cause an average temperature of the second storage compartment to be lower than the set temperature. Therefore, when the first storage compartment is cooled to the shutdown temperature, the compressor does not need to continue running in order to refrigerate the second storage compartment, thereby avoiding causing the temperature of the second storage compartment to be excessively low.

In an embodiment, the determining, in association with an ambient temperature, whether to continue running the compressor in order to cool the second storage compartment includes: determining whether the ambient temperature is between a first ambient temperature threshold T1 and a second ambient temperature threshold T2 to determine whether to continue running the compressor in order to cool the second storage compartment, and when the ambient temperature is between the first ambient temperature threshold T1 and the second ambient temperature threshold T2, continuing running the compressor in order to cool the second storage compartment.

In an embodiment, the first storage compartment is a freezing compartment, the temperature of the second storage compartment may be set to be higher than or equal to zero degrees centigrade, and the step of determining whether to continue running a compressor in order to cool the second storage compartment includes determining whether an ambient temperature is between a first ambient temperature threshold T1 and a second ambient temperature threshold T2 to determine whether to continue running the compressor in order to cool the second storage compartment, and when the ambient temperature is between the first ambient temperature threshold T1 and the second ambient temperature threshold T2, continuing running the compressor in order to cool the second storage compartment.

Experiments show that in an ambient temperature range between the first ambient temperature threshold T1 and the second ambient temperature threshold T2, after the first storage compartment is cooled to the shutdown temperature of the first storage compartment, even if the temperature of the second storage compartment does not reach the turn-on temperature, when the compressor still continues running in order to cool the second storage compartment, a cooling capacity of the compressor running in the combination mode can not only cool the second storage compartment to the shutdown temperature of the second storage compartment, but also replenish a loss of a cooling capacity of the first storage compartment set as the freezing compartment and keep the first storage compartment at the shutdown temperature of the first storage compartment, which can effectively reduce turn-on and shut-down frequencies of the compressor, and help to improve refrigeration efficiency of the refrigeration device.

The first ambient temperature threshold T1 and the second ambient temperature threshold T2 may be preset by the refrigeration device.

In an embodiment, the first ambient temperature threshold T1 and the second ambient temperature threshold T2 may be respectively the same as or approximate to high and low thresholds of a middle ambient temperate range set by a manufacturer. In another embodiment, at least one of the first ambient temperature threshold T1 and the second ambient temperature threshold T2 is in the middle ambient temperate range. For example, the first ambient temperature threshold T1 may be between 19 °C to 21 °C, and the second ambient temperature threshold T2 may be between 34 °C to 36 °C.

In an embodiment, the determining whether to continue running a compressor in order to cool the second storage compartment includes: determining whether a running time of the compressor is greater than or equal to a first runtime value T3, and if the running time of the compressor is greater than or equal to the first runtime value T3, not continuing running the compressor based on a purpose of cooling the second storage compartment; and/or
determining whether a cooling time of the first storage compartment is greater than or equal to a first cooling time value T4, and when the cooling time of the first storage compartment is greater than or equal to the first cooling time value T4, not continuing running the compressor based on the purpose of cooling the second storage compartment.

Using the first cooling time value T4 or the first running time value T3 as a condition or one of conditions for determining whether the compressor continues running in order to cool the second storage compartment helps to avoid, on the one hand, a service life of the compressor from being affected because the compressor keeps working for a long time (such as because of heavy load). On the other hand, in the foregoing first cooling time T4 or the first running time T3, the compressor also responds to a refrigeration requirement of the second storage compartment, and cools the second storage compartment multiple times on the basis of determining that the temperature of the second storage compartment is greater than the reduced turn-on temperature of the second storage compartment, to cause an average temperature of the second storage compartment to be lower than the set temperature. Except the first cooling time T4 or the first running time T3, the compressor does not continue cooling the second storage compartment on the basis of determining that the temperature of the second storage compartment is greater than the reduced turn-on temperature, which helps to avoid an average temperature of the second storage compartment from being lower than the set temperature for an excessively time.

In an embodiment, the step of determining whether a running time of the compressor is greater than or equal to a first runtime value T3 and/or determining whether a cooling time of the first storage compartment is greater than or equal to a first cooling time value T4 is earlier than the step of determining whether the temperature of the second storage compartment is greater than or equal to a preset reduced turn-on temperature.

In an embodiment, the determining whether to continue running a compressor in order to cool the second storage compartment includes: determining whether the refrigeration device is set to be in a quick-freeze mode, and if the refrigeration device is set to be in the quick-freeze mode, not continuing running the compressor based on the purpose of cooling the second storage compartment.

In the quick-freeze mode, the refrigeration device has relatively heavy operating load, and a freezing compartment set to be in the quick-freeze mode generally needs to a relatively long cooling time to reach a shutdown temperature of the freezing compartment. In a cooling process of the freezing compartment, the compressor also responds to a refrigeration requirement of another compartment (such as a refrigeration compartment or a chill compartment or a variable-temperature compartment whose temperature is higher than that of a freezing compartment), and cools the another compartment multiple times on the basis of determining whether a temperature of the another compartment is greater than a reduced turn-on temperature of the another compartment, to cause an average temperature of the another compartment to be lower than a set temperature for a relatively long time.

In an embodiment, a temperature difference between the reduced turn-on temperature and the turn-on temperature of the second storage compartment is constant.

In an embodiment, the temperature difference between the reduced turn-on temperature and the turn-on temperature of the second storage compartment is greater than or equal to 0.5 °C and less than or equal to 1 °C.

In an embodiment, the reduced turn-on temperature is variable and is associated with an ambient temperature. In an embodiment, a temperature difference between the reduced turn-on temperature and the turn-on temperature of the second storage compartment is variable and is associated with an ambient temperature. In an embodiment, the first storage compartment is a freezing compartment, the second storage compartment may be set within a temperature range of above zero degrees centigrade, and when an ambient temperature is between a first ambient temperature threshold T1 and a second ambient temperature threshold T2, a temperature difference between the reduced turn-on temperature and the turn-on temperature of the second storage compartment is greater than a temperature difference between the reduced turn-on temperature and the shutdown temperature of the second storage compartment, where the first ambient temperature threshold T1 is less than the second ambient temperature threshold T2.

In an embodiment, the reduced turn-on temperature is equal to or approximate to the shutdown temperature of the second storage compartment.

In an embodiment, when the ambient temperature is less than the first ambient temperature threshold T1, the temperature difference between the reduced turn-on temperature and the turn-on temperature of the second storage compartment is less than the temperature difference between the reduced turn-on temperature and the shutdown temperature of the second storage compartment; and/or
when the ambient temperature is greater than the second ambient temperature threshold T2, the temperature difference between the reduced turn-on temperature and the turn-on temperature of the second storage compartment is less than the temperature difference between the reduced turn-on temperature and the shutdown temperature of the second storage compartment.

In an embodiment, the reduced turn-on temperature is less than and approximate to the shutdown temperature of the second storage compartment.

In an embodiment, the method includes: when the second storage compartment reaches the shutdown temperature of the second storage compartment and the temperature of the first storage compartment is less than the turn-on temperature of the first storage compartment, determining, based on whether the temperature of the first storage compartment is greater than a reduced turn-on temperature of the first storage compartment, whether to continue running the compressor in order to cool the first storage compartment.

In an embodiment, the first ambient temperature threshold T1 and the second ambient temperature threshold T2 are respectively a low limit of a middle ambient temperate range and a high limit of the middle ambient temperate range.

The objective of the present invention is further achieved by a refrigeration device, including a first storage compartment, a second storage compartment, a refrigeration system including a compressor, and a controller for controlling the refrigeration system, where the controller is set to control the refrigeration system according to any one of the foregoing methods.

### BRIEF DESCRIPTION OF THE DRAWINGS

FIG. 1 is a flowchart of an operating method of a refrigeration device according to an aspect of the present invention;
FIG. 2 is a first embodiment in FIG. 1 of determining whether to continue running a compressor in order to cool a second storage compartment;
FIG. 3 is a second embodiment in FIG. 1 of determining whether to continue running a compressor in order to cool a second storage compartment;
FIG. 4 is a third embodiment in FIG. 1 of determining whether to continue running a compressor in order to cool a second storage compartment;
FIG. 5 is a fourth embodiment in FIG. 1 of determining whether to continue running a compressor in order to cool a second storage compartment; and
FIG. 6 is a fifth embodiment in FIG. 1 of determining whether to continue running a compressor in order to cool a second storage compartment.

### DETAILED DESCRIPTION

The following clearly and completely describes the technical solutions in the embodiments of the present invention with reference to the accompanying drawings. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

The present invention is applicable to a refrigeration device having a single refrigeration cycle system, a dual refrigeration cycle system, or a multiple refrigeration cycle system and two or more storage compartments whose temperatures can be controlled independently.

The refrigeration device includes a case body having internal space, and the internal space of the case body is constructed to accommodate foods. The internal space may be separated by a separation panel into different storage compartments, so as to place different foods. For example, the internal space may be separated into two, three or more storage compartments, and temperatures of the different storage compartments can be controlled independently. The internal space may be closed by a door body. In addition, the refrigeration device includes a refrigeration loop, and corresponding temperature adjustment may be performed in the internal space by means of the refrigeration loop. Therefore, the refrigeration loop specially includes an evaporator, a condenser, a compressor, and a corresponding connection pipe, and a refrigerant is cycled in the connection pipe.

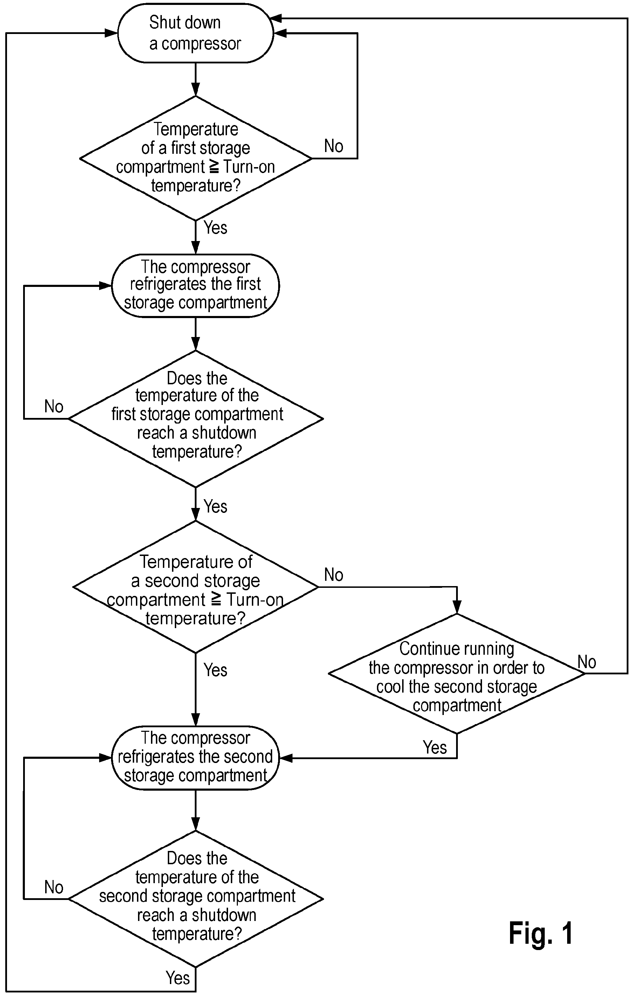

FIG. 1 is a flowchart of an operating method of a refrigeration device according to an aspect of the present invention. An initial state of the refrigeration device is set to a shut-down state of a compressor. A controller of the refrigeration device first determines whether a temperature of an arbitrary storage compartment, such as a first storage compartment is greater than a first turn-on temperature of the storage compartment. If the temperature of the first storage compartment is greater than the first turn-on temperature of the storage compartment, the controller of the refrigeration device controls, in response to a refrigeration requirement of the first storage compartment, the compressor to be turned on to refrigerate the first storage compartment. When the first storage compartment reaches a shutdown temperature of the first storage compartment, the controller of the refrigeration device then determines whether a temperature of a next arbitrary storage compartment, such as a second storage compartment, reaches a turn-on temperature of the second storage compartment as well. If the temperature of the second storage compartment is greater than the turn-on temperature of the second storage compartment, the controller of the refrigeration device controls, in response to a refrigeration requirement of the second storage compartment, the compressor to be turned on to refrigerate the second storage compartment. The compressor can be shut down until each storage compartment of the refrigeration device reaches a shutdown temperature of the storage compartment. If the temperature of the second storage compartment is less than the turn-on temperature of the second storage compartment, the refrigeration device enters a combination mode, that is, whether should continue running the compressor in order to cool the second storage compartment. It can be seen that when the refrigeration of the first storage compartment ends and the temperature of the second storage compartment does not reach the turn-on temperature, the compressor may still continue running based on a purpose of cooling the second storage compartment. For example, the compressor may continue running in order to cool the second storage compartment to a shutdown temperature of the second storage compartment, which helps to reduce a probability of frequently turning on and shutting down the compressor in a short time, thereby helping to reduce power consumption, prolonging a service life, and reduce noise of the refrigeration device.

In the present invention, the turn-on temperature of the storage compartment refers to a turn-on temperature limit of the storage compartment. That is, when a temperature of the compressor reaches the temperature limit, the controller of the refrigeration device may determine that the storage compartment has a refrigeration requirement and the compressor should run to cool the storage compartment. A turn-on temperature of a storage compartment is generally related to a set temperature of the storage compartment. In an embodiment, at a same set temperature, the turn-on temperature of the storage compartment may be constant. In an embodiment, the turn-on temperature of the storage compartment may be adjusted based on some conditions. For example, the controller may adjust the turn-on temperature of the storage compartment based on an ambient temperature.

In the present invention, the shutdown temperature of the storage compartment refers to a shutdown temperature limit of the storage compartment. That is, when the storage compartment is cooled to the shutdown temperature limit, the compressor may stop cooling the storage compartment. A shutdown temperature of a storage compartment is generally related to a set temperature of the storage compartment. In an embodiment, at a same set temperature, the shut-down temperature of the storage compartment is constant. The shut-down temperature of the storage compartment may be adjusted based on some conditions. For example, the controller of the refrigeration device may adjust the shut-down temperature of the storage compartment based on an ambient temperature.

In an embodiment, a temperature difference between a reduced turn-on temperature and the turn-on temperature of the second storage compartment constant. For example, the temperature difference is greater than or equal to 0.5 °C and less than or equal to 1 °C. In an embodiment, a reduced turn-on temperature is variable and is associated with an ambient temperature, or a temperature difference between a reduced turn-on temperature and the turn-on temperature of the second storage compartment is variable and is associated with an ambient temperature.

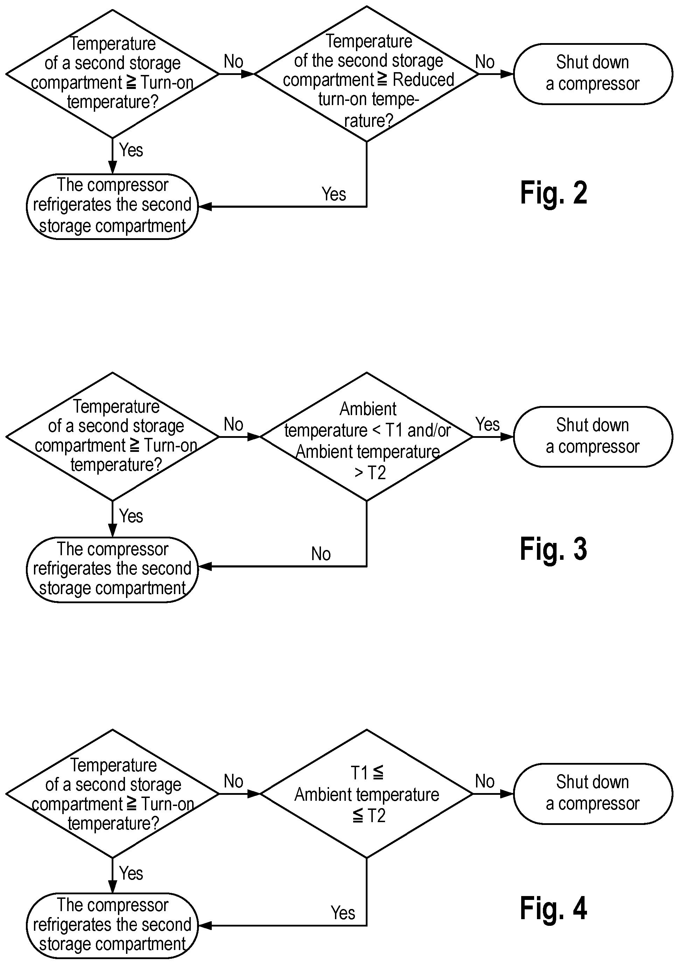

FIG. 2 is a first embodiment in FIG. 1 of determining whether to continue running the compressor in order to cool the second storage compartment. With reference to FIG. 1, when the temperature of the second storage compartment is less than the turn-on temperature of the second storage compartment, the controller of the refrigeration device continues determining whether the temperature of the second storage compartment is greater than or equal to the reduced turn-on temperature of the second storage compartment. The reduced turn-on temperature is lower than the turn-on temperature of the second storage compartment, and greater than or equal to a shutdown temperature of the second storage compartment. If the temperature of the second storage compartment is greater than or equal to the reduced turn-on temperature of the second storage compartment, the refrigeration device enters a combination mode, and the compressor is not shut down and continues running in order to cool the second storage compartment. The compressor may stop running until the second storage compartment reaches the shutdown temperature of the second storage compartment. If the temperature of the second storage compartment is not greater than the reduced turn-on temperature of the second storage compartment, the refrigeration device does not enter a combination mode, and the compressor may stop working.

Therefore, even if the second storage compartment does not reach the turn-on temperature (which may also be referred to as a normal turn-on temperature) of the second storage compartment, in a combination mode, when the temperature of the second storage compartment reaches the reduced turn-on temperature, the compressor may continue running based on a purpose of cooling the second storage compartment, which helps to prolong a single running time of the compressor, and reduce turn-on and shut-down frequencies of the compressor. In addition, using the reduced turn-on temperature to determine whether to continue running the compressor in order to cool the second storage compartment is easily implemented. Moreover, by setting the reduced turn-on temperature properly, a running mode of the compressor can be adjusted more effectively and more accurately.

In an embodiment, a reduced turn-on temperature is greater than a shutdown temperature, or a reduced turn-on temperature of a storage compartment may even be set to be equal to a shutdown temperature of the storage compartment. For example, a reduced turn-on temperature of a refrigeration compartment/a chill compartment/a variable-temperature compartment whose temperature is higher than that of a freezing compartment (compared with the freezing compartment, an evaporation temperature of a refrigerant in evaporators corresponding to these compartments is higher) may be set to a shutdown temperature thereof. Therefore, when refrigeration of the freezing compartment ends, in most cases, the compressor can continue running to cool the refrigeration compartment/the chill compartment/the variable-temperature compartment whose temperature is higher than that of the freezing compartment, so that a running time for cooling the refrigeration compartment/the chill compartment/the variable-temperature compartment whose temperature is higher than that of the freezing compartment can be effectively increased, thereby helping to reduce turn-on and shut-down frequencies of the compressor. In addition, it is found that it helps to improve refrigeration efficiency of the refrigeration device having a dual refrigeration cycle system/a multiple refrigeration cycle system. For the dual refrigeration cycle/multiple refrigeration cycle system, an evaporation temperature of a refrigerant in an evaporator of the refrigeration compartment/the chill compartment/the variable-temperature compartment whose temperature is higher than that of the freezing compartment; therefore it helps to improve energy efficiency of the refrigeration device.

FIG. 3 is a second embodiment in FIG. 1 of determining whether to continue running the compressor in order to cool the second storage compartment. With reference to FIG. 1, when the temperature of the second storage compartment is less than the turn-on temperature of the second storage compartment, the controller of the refrigeration device continues determining whether an ambient temperature is less than a first ambient temperature threshold T1 and/or whether an ambient temperature is greater than a second ambient temperature threshold T2. If the ambient temperature is less than the first ambient temperature threshold T1 and/or the ambient temperature is greater than the second ambient temperature threshold T2, the refrigeration device controls the compressor to be shut down and not to continue cooling the second storage compartment; otherwise, the compressor may continue running in order to cool the second storage compartment.

The ambient temperature refers to a temperature of an environment in which the refrigeration device is located. High and low ambient temperatures have different impacts on running of the refrigeration device, and different storage compartments of the refrigeration device have different refrigeration requirements at different ambient temperatures. Therefore, using the ambient temperature as one of conditions for determining whether to continue running the compressor in order to cool a storage compartment helps to evaluate a refrigeration requirement of a storage compartment more accurately, and form more precise refrigeration control.

The first ambient temperature threshold T1 refers to a relatively low preset ambient temperature value. For example, the first ambient temperature threshold T1 may be lower than or equal to or approximate to a set temperature of the second storage compartment. When the first storage compartment is cooled to the shutdown temperature of the first storage compartment, because an external ambient temperature is relatively low, the temperature of the second storage compartment is easily kept at the set temperature. Therefore, the compressor does not need to continue running in order to refrigerate the second storage compartment.

The second ambient temperature threshold T2 refers to a relatively high preset ambient temperature value. At the relatively high ambient temperature, the refrigeration device has relatively heavy operating load, and the first storage compartment set as a freezing compartment generally needs a relatively long cooling time to reach the shutdown temperature of the first storage compartment. In a cooling process of the first storage compartment, the compressor also responds to a refrigeration requirement of the second storage compartment set as a refrigeration compartment/a chill compartment/a variable-temperature compartment whose temperature is higher than that of a freezing compartment, and cools the second storage compartment multiple times on the basis of determining that the temperature of the second storage compartment is greater than the reduced turn-on temperature of the second storage compartment, to cause an average temperature of the second storage compartment to be lower than the set temperature. Therefore, when the first storage compartment is cooled to the shutdown temperature, the compressor does not need to continue running in order to refrigerate the second storage compartment, thereby avoiding causing the temperature of the second storage compartment to be excessively low.

In the embodiment, preferably, a temperature difference between the reduced turn-on temperature and the turn-on temperature of the second storage compartment is less than a temperature difference between the reduced turn-on temperature and a shutdown temperature of the second storage compartment. The reduced turn-on temperature is less than and approximate to the turn-on temperature of the second storage compartment.

FIG. 4 is a third embodiment in FIG. 1 of determining whether to continue running the compressor in order to cool the second storage compartment. With reference to FIG. 1, when the temperature of the second storage compartment is less than the turn-on temperature of the second storage compartment, the controller of the refrigeration device continues determining whether an ambient temperature is between a first ambient temperature threshold T1 and a second ambient temperature threshold T2.

When the ambient temperature is between the first ambient temperature threshold T1 and the second ambient temperature threshold T2, the compressor continues running in order to cool the second storage compartment.

Especially preferably, in this embodiment, the first storage compartment is a freezing compartment, and the temperature of the second storage compartment may be set to be higher than or equal to zero degrees centigrade. A temperature difference between the reduced turn-on temperature and the turn-on temperature of the second storage compartment is greater than a temperature difference between the reduced turn-on temperature and a shutdown temperature of the second storage compartment. The reduced turn-on temperature is equal to or approximate to the shutdown temperature of the second storage compartment, where the first ambient temperature threshold T1 is less than the second ambient temperature threshold T2. Experiments show that in an ambient temperature range between the first ambient temperature threshold T1 and the second ambient temperature threshold T2, after the first storage compartment is cooled to the shutdown temperature of the first storage compartment, even if the temperature of the second storage compartment does not reach the turn-on temperature, when the refrigeration device enters a combination mode and the compressor still continues running in order to cool the second storage compartment, a cooling capacity of the compressor running in the combination mode can not only cool the second storage compartment to the shutdown temperature of the second storage compartment, but also replenish a loss of a cooling capacity of the first storage compartment set as the freezing compartment and keep the first storage compartment at the shutdown temperature of the first storage compartment, which can effectively reduce turn-on and shut-down frequencies of the compressor, and help to improve refrigeration efficiency of the refrigeration device.

The first ambient temperature threshold T1 and the second ambient temperature threshold T2 may be preset by the refrigeration device. In an embodiment, the first ambient temperature threshold T1 and the second ambient temperature threshold T2 may be respectively the same as or approximate to high and low thresholds of a middle ambient temperate range set by a manufacturer. In another embodiment, at least one of the first ambient temperature threshold T1 and the second ambient temperature threshold T2 is in the middle ambient temperate range. The first ambient temperature threshold T1 and the second ambient temperature threshold T2 are respectively a low limit of a middle ambient temperate range and a high limit of the middle ambient temperate range. For example, the first ambient temperature threshold T1 may be between 19 °C to 21 °C, and the second ambient temperature threshold T2 may be between 34 °C to 36 °C.

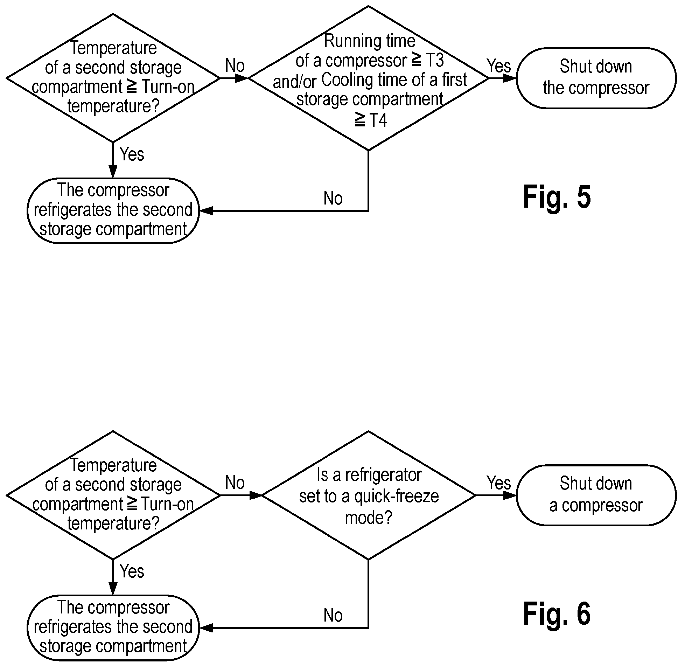

FIG. 5 is a fourth embodiment in FIG. 1 of determining whether to continue running the compressor in order to cool the second storage compartment. With reference to FIG. 1, when the temperature of the second storage compartment is less than the turn-on temperature of the second storage compartment, the controller of the refrigeration device continues determining whether a running time of the compressor is greater than or equal to a first runtime value T3, and/or whether a cooling time of the first storage compartment is greater than or equal to a first cooling time value T4. When the running time of the compressor is greater than or equal to the first running time value T3 or the cooling time of the first storage compartment is greater than or equal to the first cooling time value T4, the refrigeration device controls the compressor to be shut down and not continue cooling the second storage compartment. Alternatively, only when the running time of the compressor is greater than or equal to the first running time value T3 and the cooling time of the first storage compartment is greater than or equal to the first cooling time value T4, the refrigeration device controls the compressor to be shut down and not continue cooling the second storage compartment; otherwise, the compressor may continue running in order to cool the second storage compartment.

Using the first cooling time value T4 or the first running time value T3 as a condition or one of conditions for determining whether the compressor continues running in order to cool the second storage compartment helps to avoid, on the one hand, a service life of the compressor from being affected because the compressor keeps working for a long time (such as because of heavy load). On the other hand, in the foregoing first cooling time T4 or the first running time T3, the compressor also responds to a refrigeration requirement of the second storage compartment, and cools the second storage compartment multiple times on the basis of determining that the temperature of the second storage compartment is greater than the reduced turn-on temperature of the second storage compartment, to cause an average temperature of the second storage compartment to be lower than the set temperature. Except the first cooling time T4 or the first running time T3, the compressor does not continue cooling the second storage compartment on the basis of determining that the temperature of the second storage compartment is greater than the reduced turn-on temperature, which helps to avoid an average temperature of the second storage compartment from being lower than the set temperature for an excessively time.

Certainly, the fourth embodiment and the second embodiment may be combined to form another new embodiment, and In the embodiment, the step of determining whether a running time of the compressor is greater than or equal to a first runtime value T3 and/or determining whether a cooling time of the first storage compartment is greater than or equal to a first cooling time value T4 is earlier than the step of determining whether the temperature of the second storage compartment is greater than or equal to a preset reduced turn-on temperature.

FIG. 6 is a fifth embodiment in FIG. 1 of determining whether to continue running the compressor in order to cool the second storage compartment. With reference to FIG. 1, when the temperature of the second storage compartment is less than the turn-on temperature of the second storage compartment, the controller of the refrigeration device continues determining whether the refrigeration device is set to be in a quick-freeze mode. When the refrigeration device is set to be in the quick-freeze mode, the compressor does not continue running based on a purpose of cooling the second storage compartment.

In the quick-freeze mode, the refrigeration device has relatively heavy operating load, and a freezing compartment set to the quick-freeze mode generally needs to a relatively long cooling time to reach a shutdown temperature of the freezing compartment. In a cooling process of the freezing compartment, the compressor also responds to a refrigeration requirement of another compartment (such as a refrigeration compartment or a chill compartment or a variable-temperature compartment whose temperature is higher than that of a freezing compartment), and cools the another compartment multiple times on the basis of determining whether a temperature of the another compartment is greater than a reduced turn-on temperature of the another compartment, to cause an average temperature of the another compartment to be lower than a set temperature for a relatively long time. Therefore, in the quick-freeze mode, it is better not to use a combination mode.

In addition, arbitrarily combining two or more of the foregoing five embodiments to form a new embodiment of determining whether to continue running a compressor in order to cool a second storage compartment can be conceived by and is obvious to a person skilled in the art, and no example is provided herein for description.

Another aspect of the present invention relates to a refrigeration device, including a first storage compartment, a second storage compartment, a refrigeration system including a compressor, and a controller for controlling the refrigeration system, where the controller is set to control the refrigeration system according to any one of the foregoing methods.

Based on the description of the embodiments, persons skilled in the art can implement or apply the present invention. Various modifications of the embodiments are apparent to persons skilled in the art, and general principles defined in the specification can be implemented in other embodiments without departing from the scope of the present invention as defined by the appended claims.

## Claims

1. An operating method of a refrigeration device, wherein, when a first storage compartment is cooled to a shutdown temperature of the first storage compartment and a temperature of a second storage compartment is lower than a turn-on temperature of the second storage compartment, determining whether to continue running a compressor in order to cool the second storage compartment, **characterized in that** the determining whether to continue running a compressor in order to cool the second storage compartment comprises determining whether the temperature of the second storage compartment is greater than or equal to a preset reduced turn-on temperature, wherein the reduced turn-on temperature is lower than the turn-on temperature of the second storage compartment, and greater than or equal to a shutdown temperature of the second storage compartment.

2. The method according to claim 1, **characterized in that** the determining whether to continue running a compressor in order to cool the second storage compartment comprises determining, in association with an ambient temperature, whether to continue running the compressor in order to cool the second storage compartment.

3. The method according to claim 2, **characterized in that** the step of determining, in association with an ambient temperature, whether to continue running the compressor in order to cool the second storage compartment comprises: determining whether the ambient temperature is less than a first ambient temperature threshold (T1), and when the ambient temperature is less than the first ambient temperature threshold (T1), not continuing running the compressor based on a purpose of cooling the second storage compartment; and/or determining whether the ambient temperature is greater than a second ambient temperature threshold (T2), and when the ambient temperature is greater than the second ambient temperature threshold (T2), not continuing running the compressor based on the purpose of cooling the second storage compartment, wherein the first ambient temperature threshold (T1) is less than the second ambient temperature threshold (T2).

4. The method according to claim 2, **characterized in that** the determining, in association with an ambient temperature, whether to continue running the compressor in order to cool the second storage compartment comprises: determining whether the ambient temperature is between a first ambient temperature threshold (T1) and a second ambient temperature threshold (T2) to determine whether to continue running the compressor in order to cool the second storage compartment, and when the ambient temperature is between the first ambient temperature threshold (T1) and the second ambient temperature threshold (T2), continuing running the compressor in order to cool the second storage compartment.

5. The method according to claim 1, **characterized in that** the first storage compartment is a freezing compartment, the temperature of the second storage compartment may be set to be higher than or equal to zero degrees centigrade, and the step of determining whether to continue running a compressor in order to cool the second storage compartment comprises determining whether an ambient temperature is between a first ambient temperature threshold (T1) and a second ambient temperature threshold (T2), and when the ambient temperature is between the first ambient temperature threshold (T1) and the second ambient temperature threshold (T2), continuing running the compressor in order to cool the second storage compartment.

6. The method according to claim 1 or 2, **characterized in that** the determining whether to continue running a compressor in order to cool the second storage compartment comprises: determining whether a running time of the compressor is greater than or equal to a first runtime value (T3), and if the running time of the compressor is greater than or equal to the first runtime value (T3), not continuing running the compressor based on a purpose of cooling the second storage compartment; and/or
determining whether a cooling time of the first storage compartment is greater than or equal to a first cooling time value (T4), and when the cooling time of the first storage compartment is greater than or equal to the first cooling time value (T4), not continuing running the compressor based on the purpose of cooling the second storage compartment.

7. The method according to claim 6, **characterized in that** the step of determining whether a running time of the compressor is greater than or equal to a first runtime value (T3) and/or determining whether a cooling time of the first storage compartment is greater than or equal to a first cooling time value (T4) is earlier than the step of determining whether the temperature of the second storage compartment is greater than or equal to a preset reduced turn-on temperature.

8. The method according to claim 1, 2, or 3, **characterized in that** the determining whether to continue running a compressor in order to cool the second storage compartment comprises: determining whether the refrigeration device is set to be in a quick-freeze mode, and if the refrigeration device is set to be in the quick-freeze mode, not continuing running the compressor based on the purpose of cooling the second storage compartment.

9. The method according to claim 1, **characterized in that** a temperature difference between the reduced turn-on temperature and the turn-on temperature of the second storage compartment is constant.

10. The method according to claim 1 or 9, **characterized in that** the temperature difference between the reduced turn-on temperature and the turn-on temperature of the second storage compartment is greater than or equal to 0.5 degrees centigrade and less than or equal to 1 degree centigrade.

11. The method according to claim 1, **characterized in that** the reduced turn-on temperature is variable and is associated with an ambient temperature.

12. The method according to claim 1 or 11, **characterized in that** a temperature difference between the reduced turn-on temperature and the turn-on temperature of the second storage compartment is variable and is associated with the ambient temperature.

13. The method according to claim 1, **characterized in that** the first storage compartment is a freezing compartment, the second storage compartment may be set within a temperature range of above zero degrees centigrade, and when an ambient temperature is between a first ambient temperature threshold (T1) and a second ambient temperature threshold (T2), a temperature difference between the reduced turn-on temperature and the turn-on temperature of the second storage compartment is greater than a temperature difference between the reduced turn-on temperature and the shutdown temperature of the second storage compartment, wherein the first ambient temperature threshold (T1) is less than the second ambient temperature threshold (T2).

14. The method according to claim 13, **characterized in that** the reduced turn-on temperature is equal to or approximate to the shutdown temperature of the second storage compartment.

15. A refrigeration device, comprising a first storage compartment, a second storage compartment, a refrigeration system comprising a compressor, and a controller for controlling the refrigeration system, wherein the controller is set to control the refrigeration system according to a method according to any one of the foregoing claims.

## Patentansprüche

1. Betriebsverfahren für eine Kühlvorrichtung, wobei, wenn ein erstes Ablagefach auf eine Abschalttemperatur des ersten Ablagefachs gekühlt wird und eine Temperatur eines zweiten Ablagefachs unter einer Einschalttemperatur des zweiten Ablagefachs liegt, ermittelt wird, ob ein Kompressor weiter betrieben werden soll, damit das zweite Ablagefach gekühlt wird, **dadurch gekennzeichnet, dass** das Ermitteln, ob ein Kompressor weiter betrieben werden soll, damit das zweite Ablagefach gekühlt wird, das Ermitteln umfasst, ob die Temperatur des zweiten Ablagefachs mindestens einer voreingestellten reduzierten Einschalttemperatur entspricht, wobei die reduzierte Einschalttemperatur unter der Einschalttemperatur des zweiten Ablagefachs liegt und mindestens einer Abschalttemperatur des zweiten Ablagefachs entspricht.

2. Verfahren nach Anspruch 1, **dadurch gekennzeichnet, dass** das Ermitteln, ob ein Kompressor weiter betrieben werden soll, damit das zweite Ablagefach gekühlt wird, das Ermitteln, ob der Kompressor weiter betrieben werden soll, damit das zweite Ablagefach gekühlt wird, in Verbindung mit einer Umgebungstemperatur umfasst.

3. Verfahren nach Anspruch 2, **dadurch gekennzeichnet, dass** das Ermitteln, ob der Kompressor weiter betrieben werden soll, damit das zweite Ablagefach gekühlt wird, in Verbindung mit einer Umgebungstemperatur Folgendes umfasst: Ermitteln, ob die Umgebungstemperatur unter einem ersten Umgebungstemperaturschwellwert (T1) liegt, und, wenn die Umgebungstemperatur unter dem ersten Umgebungstemperaturschwellwert (T1) liegt, kein weiteres Betreiben des Kompressors zwecks Kühlens des zweiten Ablagefachs, und/oder Ermitteln, ob die Umgebungstemperatur über einem zweiten Umgebungstemperaturschwellwert (T2) liegt, und, wenn die Umgebungstemperatur über dem zweiten Umgebungstemperaturschwellwert (T2) liegt, kein weiteres Betreiben des Kompressors zwecks Kühlens des zweiten Ablagefachs, wobei der erste Umgebungstemperaturschwellwert (T1) unter dem zweiten Umgebungstemperaturschwellwert (T2) liegt.

4. Verfahren nach Anspruch 2, **dadurch gekennzeichnet, dass** das Ermitteln, ob der Kompressor weiter betrieben werden soll, damit das zweite Ablagefach gekühlt wird, in Verbindung mit einer Umgebungstemperatur Folgendes umfasst: Ermitteln, ob die Umgebungstemperatur zwischen einem ersten Umgebungstemperaturschwellwert (T1) und einem zweiten Umgebungstemperaturschwellwert (T2) liegt, um zu ermitteln, ob der Kompressor weiter betrieben werden soll, damit das zweite Ablagefach gekühlt wird, und, wenn die Umgebungstemperatur zwischen dem ersten Umgebungstemperaturschwellwert (T1) und dem zweiten Umgebungstemperaturschwellwert (T2) liegt, weiteres Betreiben des Kompressors, damit das zweite Ablagefach gekühlt wird.

5. Verfahren nach Anspruch 1, **dadurch gekennzeichnet, dass** es sich bei dem ersten Ablagefach um ein Gefrierfach handelt, die Temperatur des zweiten Ablagefachs auf mindestens null Grad Celsius eingestellt werden kann und das Ermitteln, ob ein Kompressor weiter betrieben werden soll, damit das zweite Ablagefach gekühlt wird, das Ermitteln umfasst, ob eine Umgebungstemperatur zwischen einem ersten Umgebungstemperaturschwellwert (T1) und einem zweiten Umgebungstemperaturschwellwert (T2) liegt, und, wenn die Umgebungstemperatur zwischen dem ersten Umgebungstemperaturschwellwert (T1) und dem zweiten Umgebungstemperaturschwellwert (T2) liegt, weiteres Betreiben des Kompressors, damit das zweite Ablagefach gekühlt wird.

6. Verfahren nach Anspruch 1 oder 2, **dadurch gekennzeichnet, dass** das Ermitteln, ob ein Kompressor weiter betrieben werden soll, damit das zweite Ablagefach gekühlt wird, Folgendes umfasst: Ermitteln, ob eine Betriebsdauer des Kompressors mindestens einem ersten Wert für die Betriebsdauer (T3) entspricht, und, wenn die Betriebsdauer des Kompressors mindestens dem ersten Wert für die Betriebsdauer (T3) entspricht, kein weiteres Betreiben des Kompressors zwecks Kühlens des zweiten Ablagefachs, und/oder
Ermitteln, ob eine Kühldauer für das erste Ablagefach mindestens einem ersten Wert für die Kühldauer (T4) entspricht, und, wenn die Kühldauer für das erste Ablagefach mindestens dem ersten Wert für die Kühldauer (T4) entspricht, kein weiteres Betreiben des Kompressors zwecks Kühlens des zweiten Ablagefachs.

7. Verfahren nach Anspruch 6, **dadurch gekennzeichnet, dass** das Ermitteln, ob eine Betriebsdauer des Kompressors mindestens einem ersten Wert für die Betriebsdauer (T3) entspricht, und/oder das Ermitteln, ob eine Kühldauer für das erste Ablagefach mindestens einem ersten Wert für die Kühldauer (T4) entspricht, vor dem Ermitteln erfolgt, ob die Temperatur des zweiten Ablagefachs mindestens einer voreingestellten reduzierten Einschalttemperatur entspricht.

8. Verfahren nach Anspruch 1, 2 oder 3, **dadurch gekennzeichnet, dass** das Ermitteln, ob ein Kompressor weiter betrieben werden soll, damit das zweite Ablagefach gekühlt wird, Folgendes umfasst: Ermitteln, ob die Kühlvorrichtung so eingestellt ist, dass sie sich in einem Schnellgefriermodus befindet, und, wenn die Kühlvorrichtung so eingestellt ist, dass sie sich in einem Schnellgefriermodus befindet, kein weiteres Betreiben des Kompressors zwecks Kühlens des zweiten Ablagefachs.

9. Verfahren nach Anspruch 1, **dadurch gekennzeichnet, dass** eine Temperaturdifferenz zwischen der reduzierten Einschalttemperatur und der Einschalttemperatur des zweiten Ablagefachs konstant ist.

10. Verfahren nach Anspruch 1 oder 9, **dadurch gekennzeichnet, dass** die Temperaturdifferenz zwischen der reduzierten Einschalttemperatur und der Einschalttemperatur des zweiten Ablagefachs mindestens 0,5 Grad Celsius und maximal 1 Grad Celsius beträgt.

11. Verfahren nach Anspruch 1, **dadurch gekennzeichnet, dass** die reduzierte Einschalttemperatur variabel und mit einer Umgebungstemperatur verknüpft ist.

12. Verfahren nach Anspruch 1 oder 11, **dadurch gekennzeichnet, dass** eine Temperaturdifferenz zwischen der reduzierten Einschalttemperatur und der Einschalttemperatur des zweiten Ablagefachs variabel und mit der Umgebungstemperatur verknüpft ist.

13. Verfahren nach Anspruch 1, **dadurch gekennzeichnet, dass** es sich bei dem ersten Ablagefach um ein Gefrierfach handelt, das zweite Ablagefach auf einen Temperaturbereich über null Grad Celsius eingestellt werden kann und, wenn eine Umgebungstemperatur zwischen einem ersten Umgebungstemperaturschwellwert (T1) und einem zweiten Umgebungstemperaturschwellwert (T2) liegt, eine Temperaturdifferenz zwischen der reduzierten Einschalttemperatur und der Einschalttemperatur des zweiten Ablagefachs größer ist als eine Temperaturdifferenz zwischen der reduzierten Einschalttemperatur und der Abschalttemperatur des zweiten Ablagefachs, wobei der erste Umgebungstemperaturschwellwert (T1) unter dem zweiten Umgebungstemperaturschwellwert (T2) liegt.

14. Verfahren nach Anspruch 13, **dadurch gekennzeichnet, dass** die reduzierte Einschalttemperatur der Abschalttemperatur des zweiten Ablagefachs entspricht oder in etwa entspricht.

15. Kühlvorrichtung, die ein erstes Ablagefach, ein zweites Ablagefach, ein Kühlsystem mit einem Kompressor und eine Steuerung zum Steuern des Kühlsystems umfasst, wobei die Steuerung so eingestellt ist, dass sie das Kühlsystem einem Verfahren nach einem der vorhergehenden Ansprüche entsprechend steuert.

## Revendications

1. Procédé de fonctionnement d'un dispositif frigorifique, comprenant, lorsqu'un premier compartiment de stockage est refroidi jusqu'à une température de coupure du premier compartiment de stockage et une température d'un deuxième compartiment de stockage est inférieure à une température de mise en marche du deuxième compartiment de stockage, la détermination s'il convient de continuer à faire fonctionner un compresseur pour refroidir le deuxième compartiment de stockage,
**caractérisé en ce que** la détermination de s'il convient de continuer à faire fonctionner un compresseur pour refroidir le deuxième compartiment de stockage comprend la détermination de si la température du deuxième compartiment de stockage est supérieure ou égale à une température réduite de mise en marche prédéfinie, dans lequel la température réduite de mise en marche est inférieure à la température de mise en marche du deuxième compartiment de stockage, et supérieure ou égale à une température de coupure du deuxième compartiment de stockage.

2. Procédé selon la revendication 1, **caractérisé en ce que** la détermination de s'il convient de continuer à actionner un compresseur pour refroidir le deuxième compartiment de stockage comprend la détermination, en association avec une température ambiante, de s'il convient de continuer à faire fonctionner le compresseur afin de refroidir le deuxième compartiment de stockage.

3. Procédé selon la revendication 2, **caractérisé en ce que** l'étape de détermination, en association avec une température ambiante, de s'il convient de continuer à faire fonctionner le compresseur afin de refroidir le deuxième compartiment de stockage comprend :
la détermination de si la température ambiante est inférieure à un premier seuil de température ambiante (T1) et, si la température ambiante est inférieure au premier seuil de température ambiante (T1), l'arrêt du fonctionnement du compresseur basé sur le refroidissement du deuxième compartiment de stockage, et/ou
la détermination de si la température ambiante est supérieure à un deuxième seuil de température ambiante (T2), et, si la température ambiante est supérieure à un deuxième seuil de température ambiante (T2), l'arrêt du fonctionnement du compresseur basé sur un refroidissement du deuxième compartiment de stockage, dans lequel le premier seuil de température ambiante (T1) est inférieur au deuxième seuil de température ambiante (T2).

4. Procédé selon la revendication 2, **caractérisé en ce que** la détermination, en association avec une température ambiante, de s'il convient de continuer à faire fonctionner le compresseur afin de refroidir le deuxième compartiment de stockage comprend :
la détermination de si la température ambiante se situe entre un premier seuil de température ambiante (T1) et un deuxième seuil de température ambiante (T2) afin de déterminer s'il convient de continuer à faire fonctionner le compresseur pour refroidir le deuxième compartiment de stockage, et, si la température ambiante se situe entre le premier seuil de température ambiante (T1) et le deuxième seuil de température ambiante (T2), la poursuite du fonctionnement du compresseur pour refroidir le deuxième compartiment de stockage.

5. Procédé selon la revendication 1, **caractérisé en ce que** le premier compartiment de stockage est un compartiment de congélation, la température du deuxième compartiment de stockage peut être réglée pour être supérieure ou égale à zéro degré centigrade, et l'étape de détermination s'il convient de continuer à faire fonctionner un compresseur pour refroidir le deuxième compartiment de stockage comprend la détermination de si une température ambiante se situe entre un premier seuil de température ambiante (T1) et un deuxième seuil de température ambiante (T2), et, si la température ambiante se situe entre le premier seuil de température ambiante (T1) et le deuxième seuil de température ambiante (T2), la poursuite du fonctionnement du compresseur pour refroidir le deuxième compartiment de stockage.

6. Procédé selon la revendication 1 ou 2, **caractérisé en ce que** la détermination de s'il convient de continuer à faire fonctionner un compresseur pour refroidir le deuxième compartiment de stockage comprend :
la détermination de si une durée de fonctionnement du compresseur est supérieure ou égale à une première valeur de durée de fonctionnement (T3), et si la durée de fonctionnement du compresseur est supérieure ou égale à la première valeur de durée de fonctionnement (T3), l'arrêt du fonctionnement du compresseur basé sur le refroidissement du deuxième compartiment de stockage,
et/ou
la détermination de si une durée de refroidissement du premier compartiment de stockage est supérieure ou égale à une première valeur de durée de refroidissement (T4), et, si la durée de refroidissement du premier compartiment de stockage est supérieure ou égale à la première valeur de durée de refroidissement (T4), l'arrêt du fonctionnement du compresseur basé sur un refroidissement du deuxième compartiment de stockage.

7. Procédé selon la revendication 6, **caractérisé en ce que** l'étape de détermination de si une durée de fonctionnement du compresseur est supérieure ou égale à une première valeur de durée de fonctionnement (T3), et/ou de détermination de si une durée de refroidissement du premier compartiment de stockage est supérieure ou égale à une première valeur de durée de refroidissement (T4) est antérieure à l'étape de détermination de si la température du deuxième compartiment de stockage est supérieure ou égale à une température réduite de mise en marche prédéfinie.

8. Procédé selon la revendication 1, 2 ou 3, **caractérisé en ce que** l'étape de détermination de s'il convient de continuer à faire fonctionner un compresseur afin de refroidir le deuxième compartiment de stockage comprend :
la détermination de si le dispositif frigorifique est réglé dans un mode de congélation rapide, et, si le dispositif frigorifique est réglé dans le mode de congélation rapide, l'arrêt du fonctionnement du compresseur basé sur le refroidissement du deuxième compartiment de stockage.

9. Procédé selon la revendication 1, **caractérisé en ce qu'**une différence de température entre la température réduite de mise en marche et la température de mise en marche du deuxième compartiment de stockage est constante.

10. Procédé selon la revendication 1 ou 9, **caractérisé en ce que** la différence de température entre la température réduite de mise en marche et la température de mise en marche du deuxième compartiment de stockage est supérieure ou égale à 0,5 degré centigrade et inférieure ou égale à 1 degré centigrade.

11. Procédé selon la revendication 1, **caractérisé en ce que** la température réduite de mise en marche est variable et associée à une température ambiante.

12. Procédé selon la revendication 1 ou 11, **caractérisé en ce qu'**une différence de température entre la température réduite de mise en marche et la température de mise en marche du deuxième compartiment de stockage est variable et associée à la température ambiante.

13. Procédé selon la revendication 1, **caractérisé en ce que** le premier compartiment de stockage est un compartiment de congélation, le deuxième compartiment de stockage peut être réglé dans une plage de température supérieure à zéro degré centigrade, et si une température ambiante se situe entre un premier seuil de température ambiante (T1) et un deuxième seuil de température ambiante (T2), une différence de température entre la température réduite de mise en marche et la température de mise en marche du deuxième compartiment de stockage est supérieure à une différence de température entre la température réduite de mise en marche et la température de coupure du deuxième compartiment de stockage, dans lequel le premier seuil de température ambiante (T1) est inférieur au deuxième seuil de température ambiante (T2).

14. Procédé selon la revendication 13, **caractérisé en ce que** la température réduite de mise en marche est égale ou approximativement égale à la température de coupure du deuxième compartiment de stockage.

15. Dispositif frigorifique, comprenant un premier compartiment de stockage, un deuxième compartiment de stockage, un système frigorifique comprenant un compresseur, et un contrôleur pour commander le système frigorifique, dans lequel le contrôleur est conçu pour commander le système frigorifique conformément à un procédé selon l'une quelconque des revendications précédentes.
